Europäisches Patentamt

European Patent Office

Office européen des brevets

(19)

(11) Publication number: 0 529 513 A2

# EUROPEAN PATENT APPLICATION

(12)

(21) Application number: 92114221.2

(22) Date of filing: 20.08.92

(51) Int. Cl.⁵: B01D 53/04, C01B 3/50

(30) Priority: 27.08.91 US 750791

(43) Date of publication of application:
03.03.93 Bulletin 93/09

(84) Designated Contracting States:
BE DE ES GB IT NL

(71) Applicant: AIR PRODUCTS AND CHEMICALS,
INC.
7201 Hamilton Boulevard
Allentown, PA 18195-1501(US)

(72) Inventor: Kratz, Wilbur Clymer
7057 Heather Road
Macungie, PA 18062(US)
Inventor: Kumar, Ravi
991 N. Treeline Drive
Allentown, PA 18103(US)

(74) Representative: Schwabe - Sandmair - Marx
Stuntzstrasse 16
W-8000 München 80 (DE)

(54) Pressure swing adsorption for hydrogen with high productivity.

(57) The present invention is directed to a hydrogen pressure swing adsorption method using multiple parallel-connected adsorbent beds and multiple countercurrent pressure equalizations in depressurizing adsorbent beds to effect increased production and recovery of hydrogen and low capital costs.

FIG.1

EP 0 529 513 A2

TECHNICAL FIELD

The present invention is directed to a pressure swing adsorption method for the production of hydrogen using pressure equalizations that sharpen adsorption fronts in an adsorption bed and minimize bed sizes for given hydrogen production. More specifically, the present invention is directed to a pressure swing adsorption process using countercurrent pressure equalizations which confine mass transfer zones at the feed end of adsorption beds and therefore minimize relative bed sizes.

BACKGROUND OF THE PRIOR ART

Techniques for pressure swing adsorptive separation of gas mixtures are well known in the industrial gas industry. Various gas mixture separations are known to be amenable to adsorptive separation, including air separation and hydrogen gas mixture separations, such as the purification of hydrogen from synthesis gas.

Early efforts to resolve gas mixtures by a pressure swing adsorption were identified in U.S. Patent 3,430,418 which recovered hydrogen from carbon dioxide, water and light hydrocarbons in a four bed adsorption process using the steps of adsorption, co-current pressure equalization with another bed, co-current depressurization to produce purge gas for another bed, countercurrent depressurization to vent byproducts, purge with depressurization gas from another bed undergoing co-current depressurization and finally repressurization first with co-current pressure equalization gas from another bed and then hydrogen product of the overall process.

U.S. Patent 3,564,816 is an improvement on the preceding mentioned patent and utilizes two co-current pressure equalizations in the operation of each of a series of four adsorption beds for hydrogen purification wherein in each pressure equalization the bed finishing adsorption equalizes its pressure with different beds each at different sequences in the overall process cycle to repressurize the various other beds at differing stages of their regeneration for renewed adsorption duty. The removal of pressure equalization gas is performed co-currently from the bed of removal, but the pressure equalization performed last can be administered to the bed receiving equalization gas either co-currently or countercurrently. A recited benefit of co-current pressure equalization with respect to the bed from which gas is being removed is that the equalization gas has the quality or purity of product gas of the process. However, as pointed out in the patent, this requires termination of the adsorption well within the time that impurities remain adsorbed in the interior of the adsorption bed so that the adsorption front remains entirely within the bed prior to breakthrough so as to facilitate co-current pressure equalization.

U.S. Patent 4,171,206 discloses an adsorptive process for recovery of hydrogen as a product, carbon dioxide as a byproduct and a mixture of gases having fuel value as a tertiary product. The process uses a plurality of parallel beds connected in series with a plurality of additional parallel connected beds. Pressure equalization is performed countercurrently between beds in series and countercurrently with beds in parallel.

U.S. Patent 4,381,189 discloses an adsorptive separation in which a plurality of main adsorption beds are utilized in conjunction with auxiliary adsorption beds. Co-current depressurization is terminated at relatively high intermediate pressure in the main adsorption beds and a countercurrent depressurization gas is passed to the auxiliary bed as feed with the resulting product from the auxiliary bed being passed to another auxiliary bed or one of the main beds as pressure equalization gas or purge gas. This technique is utilized to reduce the length of the adsorption front in the main adsorption bed caused by the co-current depressurization step.

U.S. Patent 4,512,780 discloses a process utilizing co-current depressurization and equalizations to recover hydrogen from impurities. The patent mentions the use of countercurrent depressurization gas after it is repressurized as a media to displace hydrogen from an adsorption bed prior to recovery of an intermediate selectively adsorbed component of the feed gas mixture.

It can be seen that the prior art directed to hydrogen product recovery is committed to co-current pressure equalizations in multi-bed adsorptive separations, purportedly because co-current pressure equalizations result in a removed equalization gas having the purity of product hydrogen which is then placed in a parallel bed undergoing repressurization without the delivery of more readily adsorbed components or impurities into the repressurizing bed. Co-current pressure equalization results in the impurity or more readily adsorbed component adsorption front passing closer to the product end of an adsorbent bed, resulting in the requirement to either have larger beds or terminating adsorption early enough so as to retain sufficient bed volume for the movement of the adsorption front during co-current pressure equalization.

Multiple countercurrent pressure equalizations are known to be performed in air separation processes as is described in U.S. Patent 4,329,158. In this process, the thrust of the invention is directed to higher oxygen purities utilizing increased temperatures of adsorption.

U.S. Patent 3,986,849 discloses a pressure swing adsorption process for hydrogen production in which seven adsorbent beds are utilized wherein at least two adsorbent beds are receiving feed gas at the same time. Dual bed simultaneous adsorption duty increases the throughput at a given point in time for a pressure swing adsorption process. Multiple pressure equalizations are also set forth in that patent.

The overwhelming direction of the prior art has been to perform hydrogen adsorptive separations using co-current pressure equalizations so as not to contaminate parallel beds with adsorbed species or impurities from a bed undergoing regeneration. This requires sufficient adsorbent or bed size to be capable of handling spreading mass transfer zones and adsorption fronts approaching the product end of an adsorbent bed.

The problem of handling adsorbed species or impurities while economizing on adsorbent and bed sizes with high hydrogen productivity known in the prior art has been overcome by the present invention which will be set forth below in greater detail.

BRIEF SUMMARY OF THE INVENTION

The present invention is a method for recovering a hydrogen-enriched product from a feed gas mixture containing hydrogen and at least one other component by pressure swing adsorption in a plurality of adsorbent beds containing adsorbent selective for the adsorption of said other component(s) over hydrogen, comprising the steps of:

introducing the feed gas into a feed end of at least one first bed of the plurality of adsorbent beds at an elevated adsorption pressure, adsorbing the other component(s) on said adsorbent and discharging the hydrogen-enriched product from a product end of the at least one first bed;

discontinuing the adsorption and pressure equalizing the first bed with a second bed of the plurality of adsorbent beds at a lower pressure to depressurize the first bed to a first intermediate pressure by removing a first depressurization gas from the first bed countercurrently from the feed gas introduction through the first bed and introducing the first depressurization gas into a feed end of the second bed;

discontinuing the pressure equalization and further pressure equalizing the first bed with a third bed of the plurality of the adsorbent beds at a further lower pressure to further depressurize the first bed to a second intermediate pressure by removing a second depressurization gas from the first bed countercurrently and introducing the second depressurization gas into a feed end of the third bed;

depressurizing the first bed countercurrently to a lowest pressure to remove the other component(s) from the first bed;

purging the first bed countercurrently by introducing hydrogen-enriched gas through the product end of the first bed and discharging the gas and residual other component(s) of the feed gas mixture through the feed end of the first bed;

pressure equalizing the first bed to the second intermediate pressure by introducing into the first bed, cocurrently to the introduction of feed gas to the first bed, a second depressurization gas from another of the plurality of adsorbent beds undergoing pressure equalization;

further pressure equalizing the first bed from the second intermediate pressure to the first intermediate pressure by introducing into the first bed, cocurrently, a first depressurization gas from another of the plurality of adsorbent beds undergoing pressure equalization;

and repressurizing the first bed countercurrently by introducing hydrogen-enriched gas through the product end of the first bed to raise the pressure to approximately the elevated adsorption pressure.

Preferably, the steps of the method are performed repeatedly in each of the plurality of beds to comprise a continuous cyclic method.

Preferably, the method is performed in four parallel connected adsorbent beds.

Preferably, the other components are selected from the group consisting of carbon dioxide, methane, carbon monoxide, nitrogen and mixtures thereof.

Preferably, the hydrogen-enriched gas purge is at least a portion of the hydrogen-enriched product of the plurality of the adsorbent beds.

Preferably, the hydrogen-enriched product is at least 99.5% hydrogen.

Preferably, the adsorbent is selected from the group consisting of zeolites, activated carbon, activated alumina and mixtures thereof.

Preferably, the pressure of the feed gas mixture during the adsorption is in the range of approximately 100 to 1000 psia.

EP 0 529 513 A2

Preferably, the adsorbent is layered in the plurality of adsorbent beds with an initial layer of activated carbon at the feed end of the beds and a subsequent layer of zeolite at the product end of the beds.

Alternatively, the process is conducted in five beds wherein at least a portion of the time during feed gas introduction and hydrogen-enriched gas production at least two parallel beds are simultaneously engaged in that portion of the overall cycle.

Alternatively, after the second pressure equalization of the first bed, the first bed is further pressure equalized with a fourth bed of the plurality of adsorbent beds at a third lower pressure to further depressurize the first bed to a third intermediate pressure by removing a third depressurization gas from the first bed countercurrently and introducing the third depressurization gas into a feed end of the fourth bed, and after the purging, pressure equalizing the first bed from the lowest pressure to the third intermediate pressure by introducing into the first bed, cocurrently, a third depressurization gas from another of the plurality of the adsorbent beds undergoing depressurization in the third pressure equalization. Preferably, this alternative is performed in five parallel connected adsorbent beds. Alternatively, this alternative is conducted in seven parallel beds in which at least two beds are simultaneously undergoing feed gas introduction and hydrogen-enriched product production for at least a portion of that cycle step.

More specifically, the present invention is a method for recovering a hydrogen-enriched product from a feed gas mixture containing hydrogen and at least one other component selected from the group consisting of carbon dioxide, methane, carbon monoxide, nitrogen and mixtures thereof by pressure swing adsorption in four parallel connected adsorbent beds containing adsorbent selective for the adsorption of the other component(s) over hydrogen, comprising the steps of:

introducing the feed gas into a feed end of a first bed of the adsorbent beds at an elevated adsorption pressure, adsorbing the other component(s) on the adsorbent and discharging the hydrogen-enriched product from a product end of the first bed until an adsorption front of the other component(s) is close to a product end of the adsorbent in the first bed;

discontinuing the adsorption and pressure equalizing the first bed with a second bed of the adsorbent beds at a lower pressure, which has undergone pressure equalization up to a second intermediate pressure, to depressurize the first bed to a first intermediate pressure by removing a first depressurization gas from the first bed, countercurrently from the feed gas introduction through the first bed, to move the adsorption front from the product end of the first bed toward the feed end of the first bed and introducing the first depressurization gas into a feed end of the second bed to equalize the pressure in the first and second beds at the first intermediate pressure;

discontinuing the pressure equalization and further pressure equalizing the first bed with a third bed of the adsorbent beds at a further lower pressure, which has undergone a purge, to further depressurize the first bed to a second intermediate pressure by removing a second depressurization gas from the first bed countercurrently to move the adsorption front further from the product end of the first bed toward the feed end of the first bed and introducing the second depressurization gas into a feed end of the third bed to equalize the pressure in the first and third beds at the second intermediate pressure;

depressurizing the first bed countercurrently to a lowest pressure to remove the other component(s) from the first bed as a third depressurization gas which is removed from the beds as a by-product;

purging the first bed countercurrently by introducing hydrogen-enriched product gas produced in the adsorbent beds through the product end of the first bed and discharging the gas and residual other component(s) of the feed gas mixture through the feed end of the first bed, which is removed from the beds as a by-product, to further move the adsorption front further from the product end of the first bed toward the feed end of the first bed;

pressure equalizing the first bed from the lowest pressure to the second intermediate pressure by introducing a second depressurization gas, cocurrently to the introduction of feed gas to the first bed, into the first bed from another of the adsorbent beds undergoing pressure equalization down to the second intermediate pressure to equalize the pressure in the two beds at the second intermediate pressure;

further pressure equalizing the first bed from the second intermediate pressure to the first intermediate pressure by introducing a first pressurization gas cocurrently into the first bed from another of the adsorbent beds undergoing pressure equalization down to the first intermediate pressure to equalize the pressure in the two beds at the first intermediate pressure;

repressurizing the first bed countercurrently by introducing hydrogen-enriched product gas produced in the adsorbent beds through the product end of the first bed to raise its pressure to approximately the elevated adsorption pressure and to prepare it to undergo the steps of the method again and performing the steps of the method sequentially in each of the four adsorbent beds in a continuous cyclic manner.

Alternatively, the present invention is a method for recovering a hydrogen-enriched product from a feed gas mixture containing hydrogen and at least one other component selected from the group consisting of

4

carbon dioxide, methane, carbon monoxide, nitrogen and mixtures thereof by pressure swing adsorption in five parallel connected adsorbent beds containing adsorbent selective for the adsorption of the other component(s) over hydrogen, comprising the steps of:

introducing the feed gas into a feed end of a first bed of the adsorbent beds at an elevated adsorption pressure, adsorbing the other component(s) on the adsorbent and discharging the hydrogen-enriched product from a product end of the first bed until an adsorption front of the other component(s) is close to a product end of the adsorbent in the first bed;

discontinuing the adsorption and pressure equalizing the first bed with a second bed of the adsorbent beds at a lower pressure, which has undergone the pressure equalization up to a second intermediate pressure, to depressurize the first bed to a first intermediate pressure by removing a first depressurization gas from the first bed, countercurrently from the feed gas introduction through the first bed, to move the adsorption front from the product end of the first bed toward the feed end of the first bed and introducing the first depressurization gas into a feed end of the second bed to equalize the pressure in the first and second beds at the first intermediate pressure;

discontinuing the pressure equalization and further pressure equalizing the first bed with a third bed of the absorbent beds at a further lower pressure, which has undergone the pressure equalization up to a third intermediate pressure, to further depressurize the first bed to a second intermediate pressure by removing a second depressurization gas from the first bed countercurrently to move the adsorption front further from the product end of the first bed toward the feed end of the first bed and introducing a second depressurization gas into a feed end of the third bed to equalize the pressure in the first and third beds at the second intermediate pressure;

discontinuing the pressure equalization and yet further pressure equalizing the first bed with a fourth bed of the adsorbent beds at a yet further lower pressure, which has undergone a purge, to further depressurize the first bed to a third intermediate pressure by removing a third depressurization gas from the first bed countercurrently to move the adsorption front yet further from the product end of the first bed toward the feed end of the first bed and introducing the third depressurization gas into a feed end of the fourth bed to equalize the pressure in the first and fourth beds at the third intermediate pressure;

depressurizing the first bed countercurrently to a lower pressure to remove the other component(s) from the first bed as a fourth depressurization gas which is removed from the beds as a by-product;

purging the first bed countercurrently by introducing hydrogen-enriched product gas produced in the adsorption beds through the product end of the first bed and discharging the gas and residual other component(s) of the feed gas mixture through the feed end of the first bed, which is removed from the beds as a by-product, to further move the adsorption front further from the product end of the first bed toward the feed end of the first bed;

pressure equalizing the first bed from the lowest pressure to the third intermediate pressure by introducing a third depressurization gas, cocurrently to the introduction of feed gas to the first bed, into the first bed from another of the adsorbent beds undergoing pressure equalization down to the third intermediate pressure to equalize the pressure in the two beds at the third intermediate pressure;

pressure equalizing the first bed from the third intermediate pressure to the second intermediate pressure by introducing a third depressurization gas, cocurrently to the introduction of feed gas to the first bed, into the first bed from another of the adsorbent beds undergoing pressure equalization down to the second intermediate pressure to equalize the pressure in the two beds at the second intermediate pressure;

further pressure equalizing the first bed from the second intermediate pressure to the first intermediate pressure by introducing a first depressurization gas cocurrently into the first bed from another of the adsorbent beds undergoing pressure equalization down to the first intermediate pressure to equalize the pressure in the two beds at the first intermediate pressure;

repressurizing the first bed countercurrently by introducing hydrogen-enriched product gas produced in the adsorbent beds through the product end of the first bed to raise its pressure to approximately the elevated adsorption pressure and to prepare it to undergo adsorption again; and

performing the steps of the method sequentially in each of the five adsorbent beds in a continuous cyclic manner.


BRIEF DESCRIPTION OF THE DRAWINGS

FIG. 1 is a schematic illustration of a first embodiment of the present invention utilizing four parallel connected adsorbent beds.

FIG. 2 is a schematic illustration of a second embodiment of the present invention utilizing five parallel connected adsorbent beds.

FIG. 3 is a schematic illustration of a third embodiment of the present invention utilizing seven parallel connected adsorbent beds.

DETAILED DESCRIPTION OF THE INVENTION

The present invention uses multiple parallel connected adsorption beds in a pressure swing adsorption cycle for separation of hydrogen from a multi-component feed gas mixture. The cycle utilizes pressure equalization steps, which are conducted in a countercurrent direction in the beds being depressurized to a lower pressure during the course of the pressure equalization, which is in contrast to the current state of the art in hydrogen pressure swing adsorption technology, which utilizes cocurrent pressure equalizations in the bed depressurizing to a lower pressure during pressure equalization.

The use of countercurrent pressure equalizations in a series of two or three separate equalizations with various distinct adsorption beds allows for the significantly reduction the adsorbent bed size, and therefore, reduces the capital cost of a system for hydrogen recovery in the pressure swing adsorption cycle. Conversely, the process of the present invention using multiple countercurrent pressure equalizations of a desorbing bed results in increased hydrogen product recovery and productivity. This improvement is achieved by using multiple countercurrent pressure equalizations in a depressurizing adsorbent bed which provides sharp mass transfer zones compared to the elongated mass transfer zones using cocurrent pressure equalizations of the known hydrogen pressure swing adsorption cycles, and the improvement is further achieved by maintaining adsorption fronts of adsorbed other components or impurities further from the product end of the adsorbent beds than the prior art hydrogen pressure swing adsorption cycles which use cocurrent pressure equalizations.

The multiple countercurrent pressure equalizations of a depressurizing adsorbent bed of the present invention is in contrast with the state of the art in hydrogen pressure swing adsorption recovery, wherein cocurrent pressure equalizations have been almost uniformly contemplated, such as set forth in U.S. 3,430,418 and U.S. 3,564,816 patents cited above. In processes with cocurrent pressure equalizations, the adsorption step is terminated when the mass transfer fronts of adsorbed other components or impurities are approximately half-way through the adsorbent bed from the feed end to the product end. Additional less strongly adsorbed product or hydrogen is then recovered from the voids in the product end of the adsorbent bed by cocurrent depressurizations or pressure equalizations. This type of cycle utilizing cocurrent pressure equalizations in a depressurizing bed has been deemed by the prior art to be the most efficient use of the adsorbent in the pressure swing adsorption bed. In countercurrent pressure equalizations of a depressurizing bed, major concentrations of other components or impurities are transferred to the feed end of another of parallel multiple beds of a pressure, swing adsorption cycle, and this has been deemed by the prior art to severely reduce the feed capacity of the adsorbent in an adsorbent bed of a hydrogen producing pressure swing adsorption cycle for the ensuing or subsequent adsorption step.

However, as will be shown for the present invention, the productivity of an adsorbent bed is much higher with countercurrent pressure equalizations in a depressurizing adsorbent bed and additionally with external product purge emanating from a product line rather than directly from a dedicated depressurizing line from another of the parallel connected adsorbent beds than would occur with cocurrent pressure equalizations in a depressurizing bed and an internally generated product purge which comes from a line dedicated to purge emanating from one parallel bed to another parallel bed.

In the prior art hydrogen pressure swing adsorption cycles, such as U.S. 3,430,418 and U.S. 3,564,816 the cocurrent pressure equalization and purge steps stretch the mass transfer zones of the other components or impurities adsorbed on the adsorbent so that these mass transfer zones occupy a very large fraction of the bed with adsorption fronts approaching the product end of the bed and thus limiting the adsorption bed capacity. Even though impurities or other components adsorbed on the adsorbent during hydrogen purification of the present invention are recycled in the present invention's countercurrent equalizations, these other components or impurities are concentrated on the adsorbent at the feed end of the adsorbent bed and the capacity gained by the relatively short mass transfer zones, in which the adsorption fronts are close to the feed end of the adsorbent beds in the present invention, more than offsets the capacity lost to recycling of the impurities or other components during countercurrent pressure equalizations of a depressurizing bed.

The net result is much higher adsorbent productivity and higher product recovery in the hydrogen pressure swing adsorption cycle of the present invention utilizing countercurrent pressure equalizations of a depressurizing bed in contrast to the hydrogen pressure swing adsorption cycles of the prior art which utilize cocurrent pressure equalizations in a depressurizing adsorption bed. The present invention also balances the product flow from a hydrogen pressure swing adsorption cycle, because hydrogen enriched product gas is always being taken in part for purge duty or repressurization in the final stages, as well as for recovery of a product from the overall process. In the prior art hydrogen pressure swing adsorption cycles, such as described in the U.S. 3,564,816, some product gas is used for pressure equalization to balance the product flow which reduces the efficiency and product recovery of the prior art processes.

The present invention is preferably performed in a plurality of parallel connected adsorbent beds having four or five beds in parallel. These beds are filled with an adsorbent which is selected for the adsorption of other components or impurities relative to hydrogen, which passes relatively unadsorbed through the adsorbent of the adsorbent beds and is recovered as product and utilized for purge or repressurization duty. Various hydrogen containing feed gases are amenable to separation with the process of the present invention, including; steam-methane reformer or synthesis gas, refinery gases with higher hydrocarbons and various other industrial off-gases such as hydrogen, argon and oxygen mixtures. These gases typically contain, in addition to hydrogen, other components or impurities of carbon dioxide, methane, carbon monoxide and nitrogen. Adsorbents which are effective for removal of these components relative to hydrogen, include; 5A molecular sieve zeolite, 13X molecular sieve zeolite and activated carbon. Typically, activated carbon would be used for the removal of carbon dioxide and methane, while 5A molecular sieve zeolite would be used for the removal of carbon monoxide and nitrogen. Combinations of adsorbents, such as an initial layer of activated carbon at the feed end of an adsorbent bed, followed by a subsequent layer of 5A or 13X molecular sieve zeolite near the product end of an adsorbent bed, can be utilized effectively for recovery of high purity hydrogen product from one or more of the components or impurities identified above.

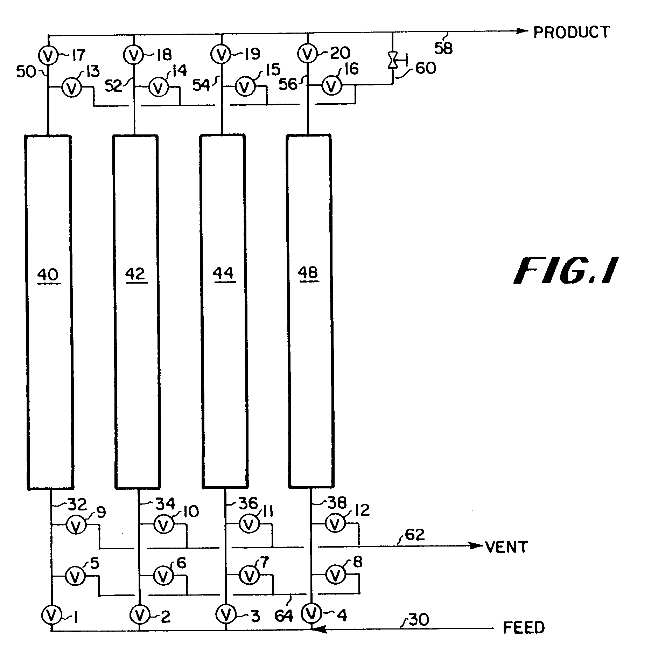

The present invention will now be set forth in greater detail with reference to two alternative embodiments. With reference to FIG. 1, a cycle of steps is performed in a plurality of four parallel connected adsorbent beds using the sequence set forth in Table 1 for cycle steps and Table 2 which shows the valve sequencing, in which "O" indicates an open valve and the absence of an "O" indicates a closed valve.

Table 1

| Cycle Steps | | | | |
|---|---|---|---|---|
| Cycle Time Minutes | Bed No. | | | |
| | 40 | 42 | 44 | 48 |
| 1 | A | PE1 | P | PE1 |
| 2 | A | PE1 | P | PE1 |
| 3 | A | RP | PE2 | PE2 |
| 4 | A | RP | I | DP |
| 5 | PE1 | A | PE1 | P |
| 6 | PE1 | A | PE1 | P |
| 7 | PE2 | A | RP | PE2 |
| 8 | DP | A | RP | I |
| 9 | P | PE1 | A | PE1 |
| 10 | P | PE1 | A | PE1 |
| 11 | PE2 | PE2 | A | RP |
| 12 | I | DP | A | RP |
| 13 | PE1 | P | PE1 | A |
| 14 | PE1 | P | PE1 | A |
| 15 | RP | PE2 | PE2 | A |
| 16 | RP | I | DP | A |
| A - Adsorption | | | | |
| PE - Pressure Equalization | | | | |
| DP - Depressurization | | | | |
| P - Purge | | | | |
| I - Idle | | | | |
| RP - Repressurization | | | | |

As indicated in Table 1, each of the four adsorbent beds undergoes a series of steps comprising adsorption, a first pressure equalization reducing the bed's pressure, a second pressure equalization reducing the bed's pressure, a depressurization to vent voids and adsorbed other components, a purge with hydrogen-enriched product gas to further remove other components or impurities adsorbed on the adsorbent, a pressure equalization to repressurize the adsorbent initially, an idle step inserted merely for timing purposes, a further pressure equalization to further repressurize the adsorbent bed, and a repressurization with hydrogen enriched gas to bring the regenerating adsorbent bed back to approximately feed pressure conditions prior to reinitiating the sequence of process steps. As it can be seen from Table 1, each bed goes through an identical series of steps in the identical sequence but in slightly different phase one to the other.

TABLE 2 — VALVE CHART (2PE OPTION)

| Time (Min) | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| 0-1 | 0 |  |  |  |  | 0 |  | 0 |  |  | 0 |  |  | 0 |  |  | 0 |  |  |  |
| 1-2 | 0 |  |  |  |  | 0 |  | 0 |  |  | 0 |  |  | 0 |  |  | 0 |  |  |  |
| 2-3 | 0 |  |  |  |  |  | 0 | 0 |  |  |  |  |  | 0 |  |  | 0 |  |  |  |
| 3-4 | 0 |  |  |  |  |  |  |  |  |  |  | 0 |  | 0 |  |  | 0 |  |  |  |
| 4-5 |  | 0 |  |  | 0 |  | 0 |  |  |  |  | 0 |  |  |  | 0 |  | 0 |  |  |
| 5-6 |  | 0 |  |  | 0 |  | 0 |  |  |  |  | 0 |  |  |  | 0 |  | 0 |  |  |
| 6-7 |  | 0 |  |  | 0 |  |  | 0 |  |  |  |  |  |  | 0 |  |  | 0 |  |  |
| 7-8 |  | 0 |  |  |  |  |  |  | 0 |  |  |  |  |  | 0 |  |  | 0 |  |  |
| 8-9 |  |  | 0 |  | 0 |  | 0 | 0 |  |  |  |  | 0 |  |  |  |  |  | 0 |  |
| 9-10 |  |  | 0 |  | 0 |  | 0 | 0 |  |  |  |  | 0 |  |  |  |  |  | 0 |  |
| 10-11 |  |  | 0 |  | 0 | 0 |  |  |  |  |  |  |  |  |  | 0 |  |  | 0 |  |
| 11-12 |  |  | 0 |  |  |  |  |  |  | 0 |  |  |  |  |  | 0 |  |  | 0 |  |
| 12-13 |  |  |  | 0 | 0 |  | 0 |  |  | 0 |  |  |  | 0 |  |  |  |  |  | 0 |
| 13-14 |  |  |  | 0 | 0 |  | 0 |  |  |  |  |  |  | 0 |  |  |  |  |  | 0 |
| 14-15 |  |  |  | 0 |  | 0 | 0 |  |  |  | 0 |  | 0 |  |  |  |  |  |  | 0 |
| 15-16 |  |  |  | 0 |  |  |  |  |  |  |  |  | 0 |  |  |  |  |  |  | 0 |

0 – Valve open, otherwise closed.

6117p4

With reference to FIG. 1, the Table 1 Cycle Steps and the Table 2 Valve Chart, a description of the first embodiment will presently be given. A hydrogen-containing feed gas mixture containing other components, such as carbon monoxide, carbon dioxide, methane and water, is introduced in feed manifold 30 at a pressure of approximately 250 psi into a first adsorption bed 40 in its feed end which is near the feed line 32. Feed passes through open valve 1. The other components are adsorbed on a 5A molecular sieve zeolite adsorbent packed within the bed 40. Preferably, a layer of activated carbon adsorbent is located near the feed end or line 32 of bed 40 and the other analogous beds to capture methane, water and carbon dioxide. Hydrogen passes through adsorbent bed 40 and exits the product end of the bed in line 50, passing through open valve 17 and exiting in product manifold 58 as a hydrogen-enriched product.

During the first portion of the adsorption in bed 40, a portion of the product in product manifold 58 passes through line 60 and open valve 15 to enter the product end of bed 44 through line 54 to purge adsorbed components from bed 44 countercurrently through line 36 and open valve 11, finally exiting through vent manifold 62. During a second portion of the adsorption step of bed 40, product in product manifold 58 is passed through line 60 and through open valve 14 in line 52 to repressurize bed 42 countercurrently to approximately feed pressure conditions.

The adsorption in bed 40 is continued until the adsorption front of contaminants on the adsorbent in bed 40 is close to the product end of bed 40 approximately where line 50 is located. Feed gas to bed 40 is then terminated by a closing of valve 1, and bed 40 is initially pressure equalized with another of the parallel beds by depressurizing the gas in bed 40 countercurrently through line 32, valve 5, pressure equalization manifold 64, valve 7 and line 36 to repressurize bed 44, which is at lower pressure, to reduce bed 40 to a first intermediate pressure. This has the effect of moving the adsorption front of adsorbed components on the adsorbent of bed 40 back toward the feed end of the bed approximate the entry of line 32.

After bed 40 and bed 44 have pressure equalized to approximately a first intermediate pressure, gas flow between those beds is discontinued. Bed 40 is then further pressure equalized with another of the parallel beds by flowing gas contained in bed 40 countercurrently through line 32, open valve 5, pressure equalization manifold 64, open valve 8, line 38, and into adsorption bed 48 which is at a lower pressure. This countercurrent pressure equalization from bed 40 is continued to a second intermediate pressure. The adsorption front of adsorbed components is further moved back toward the feed end of bed 40 as a result of this pressure equalization. Flow communication between the two beds 40 and 48 is discontinued, and adsorption bed 40 is depressurized by passing gas in adsorption bed 40 through line 32 countercurrently and open valve 9 to exit as vent gas in vent manifold 62.

Adsorption bed 40 is then purged countercurrently with product or hydrogen enriched gas eminating from vessel 44 through line 54, open valve 19, product manifold 58, line 60, open valve 13, and line 50 to purge any remaining adsorbed other components from the adsorption in bed 40 and further push the adsorption front of other components back toward the feed end of bed 40 with purge effluent flowing through line 32, open valve 9, and vent manifold 62.

Adsorption bed 40 is then pressure equalized from it lowest most pressure to a second intermediate pressure by introduction of pressure equalization gas from adsorption bed 42. This pressure equalization gas leaves bed 42 countercurrently, passing through line 34, open valve 6, pressure equalization manifold 64, open valve 5, and line 32, repressurizing adsorbent bed 40 while valves 17, 13, 9 and 1 remain closed. When pressure equalization at the second intermediate pressure is reached between adsorption bed 40 and adsorption bed 42, flow between the two beds is discontinued. Adsorption bed 40 then is involved in an idle step in which it is not participating in gas processing for timing reasons.

At appropriate timing, adsorption bed 40 is further pressure equalized up to a first intermediate pressure by receiving pressure equalization gas from adsorption bed 44 passing through line 36, open valve 7, pressure equalization manifold 64, open valve 5, and line 32 to arrive at adsorption bed 40 to pressurize it to the first intermediate pressure. When the gas pressure between adsorption bed 40 and adsorption bed 44 is approximately equalized, the flow between these two beds is discontinued.

Adsorption bed 40 is then further repressurized to approximately feed pressure conditions by flow of product or hydrogen-enriched gas from bed 48 through line 56, open valve 20, product manifold 58, line 60, and open valve 13 before passing through line 50 countercurrently into adsorption bed 40. Countercurrent repressurization has a beneficial effect of placing product quality gas in the product end of adsorption bed 40 and pushing adsorption fronts of other components back toward the feed end of adsorption bed 40, particularly after the pressure equalization which are conducted with respect to adsorption bed 40 in a co-current fashion when being received from other adsorption beds. Adsorbent bed 40 has now completed a full cycle as set forth in Table 1 and the valve chart in Table 2 and is ready for a new step of adsorption.

Each of the parallel adsorbent beds 40, 42, 44 and 48 go through a similar sequence of process steps as set forth in Table 1 in which feed is introduced into each bed in order through feed manifold 30 and individual feed lines 32, 34, 36 and 38, while product is removed at the appropriate times from each bed through product lines 50, 52, 54 and 56 to be recovered in product manifold 58. Repressurization and purge line 60 cycles product from product manifold 58 to various of the respective vessels in accordance with the valve openings in Table 2 while vent is removed in vent manifold 62 from each of the beds at a respective period of time, and pressure equalization gas is communicated from one bed to another in pressure equalization manifold 64. This completes the description of the first embodiment of the present invention.

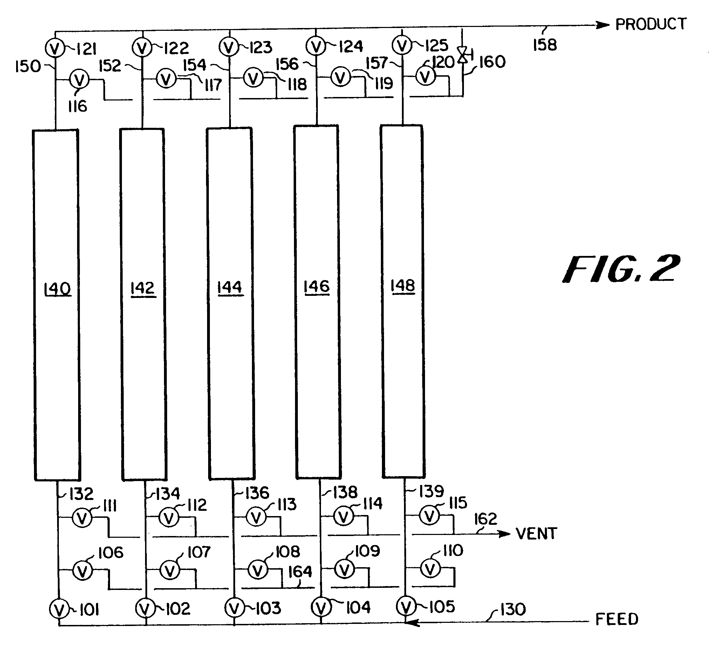

The present invention will now be described with regard to the alternative embodiment utilizing five parallel connected adsorbent beds and a third and additional pressure equalization. This alternative embodiment will be described with reference to FIG. 2 and the cycle steps identified in Table 3, which are performed in the system illustrated in FIG. 2 by operation of the valves in accordance with the valve sequence in Table 4.

**TABLE 3 – CYCLE STEPS**

| Cycle Time Minutes | Bed Number | | | | |
|---|---|---|---|---|---|
| | 140 | 142 | 144 | 146 | 148 |
| 0-1 | A | PE1 | I | P | PE1 |
| 1-2 | A | I | PE2 | P | PE2 |
| 2-3 | A | RP | I | PE3 | PE3 |
| 3-4 | A | RP | I | I | DP |
| 4-5 | PE1 | A | PE1 | I | P |
| 5-6 | PE2 | A | I | PE2 | P |
| 6-7 | PE3 | A | RP | I | PE3 |
| 7-8 | DP | A | RP | I | I |
| 8-9 | P | PE1 | A | PE1 | I |
| 9-10 | P | PE2 | A | I | PE2 |
| 10-11 | PE3 | PE3 | A | RP | I |
| 11-12 | I | DP | A | RP | I |
| 12-13 | I | P | PE1 | A | PE1 |
| 13-14 | PE2 | P | PE2 | A | I |
| 14-15 | I | PE3 | PE3 | A | RP |
| 15-16 | I | I | DP | A | RP |
| 16-17 | PE1 | I | P | PE1 | A |
| 17-18 | I | PE2 | P | PE2 | A |
| 18-19 | RP | I | PE3 | PE3 | A |
| 19-20 | RP | I | I | DP | A |

A – Adsorption  
DP – Depressurization  
I – Idle  
P – Purge  
PE – Pressure Equalization  
RP – Repressurization

6117p(2)

In this case, each of the five beds undergoes the sequence of steps of adsorption, an initial pressure equalization to depressurize the bed, a second pressure equalization to further depressurize the bed, a third pressure equalization to further depressurize the bed, depressurization to remove adsorbed components and void gas to vent from the process, a purge of hydrogen-enriched gas to further remove adsorbed components and impurities, which gas is also vented from the process, a pressure equalization to initially repressurize the bed an idle step inserted merely for timing purposes, a second pressure equalization to further repressurize the bed, an idle step for timing purposes and a final pressure equalization to repressurize the bed, followed by the repressurization with hydrogen-enriched gas to reach approximately the initial adsorption pressure. Again, each of the five parallel-connected adsorbent beds undergoes the identical sequence of steps in the identical series, but as can be seen from Table 3, each bed is out of phase with the other of the five adsorbent beds.

TABLE 4 — VALVE CHART (3PE OPTION)

| Time (Min) | \- Valve Number | | | | | | | | | | | | | | | | | | | | | | | | |
|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
| 0-1 | 0 | | | | | | 0 | | | 0 | | | | 0 | | | | | 0 | | 0 | | | | |
| 1-2 | 0 | | | | | | | 0 | | 0 | | | | 0 | | | | | 0 | | 0 | | | | |
| 2-3 | 0 | | | | | | | | 0 | 0 | | | | | | | 0 | | | | 0 | | | | |
| 3-4 | 0 | | | | | | | | | | | | | 0 | | | 0 | | | | 0 | | | | |
| 4-5 | | 0 | | | | 0 | | 0 | | | | | | 0 | | | | | | 0 | | 0 | | | |
| 5-6 | | 0 | | | | 0 | | | 0 | | | | | 0 | | | | | | 0 | | 0 | | | |
| 6-7 | | 0 | | | | 0 | | | | 0 | | | | | | | | 0 | | | 0 | | | | |
| 7-8 | | 0 | | | | | | | | | 0 | | | | | | | 0 | | | 0 | | | | |
| 8-9 | | | 0 | | | 0 | | 0 | | | 0 | | | | | 0 | | | | | | | 0 | | |
| 9-10 | | | 0 | | | 0 | | | 0 | 0 | | | | | | 0 | | | | | | | 0 | | |
| 10-11 | | | 0 | | 0 | 0 | | | | | | | | | | | | | 0 | | | | 0 | | |
| 11-12 | | | 0 | | | | | | | | | 0 | | | | | | | 0 | | | | 0 | | |
| 12-13 | | | | 0 | | | 0 | | 0 | | 0 | | | | | | 0 | | | | | | | 0 | |
| 13-14 | | | | 0 | | 0 | | 0 | | | 0 | | | | | | 0 | | | | | | | 0 | |
| 14-15 | | | | 0 | | | 0 | 0 | | | | | | | | | | | | 0 | | | | 0 | |
| 15-16 | | | | 0 | | | | | | | | 0 | | | | | | | | 0 | | | | 0 | |
| 16-17 | | | | | 0 | 0 | | | 0 | | | 0 | | | | | | 0 | | | | | | | 0 |
| 17-18 | | | | | 0 | | 0 | | 0 | | | 0 | | | | | | | 0 | | | | | | 0 |
| 18-19 | | | | | 0 | | | 0 | 0 | | | | | | | 0 | | | | | | | | | 0 |
| 19-20 | | | | | 0 | | | | | | | | | 0 | | 0 | | | | | | | | | 0 |

0 → Valve open, otherwise closed.

6117p3

EP 0 529 513 A2

TABLE 4 - VALVE CHART (3PE OPTION)

| Time (Min) Valve No. | 0-1 | 1-2 | 2-3 | 3-4 | 4-5 | 5-6 | 6-7 | 7-8 | 8-9 | 9-10 | 10-11 | 11-12 | 12-13 | 13-14 | 14-15 | 15-16 | 16-17 | 17-18 | 18-19 | 19-20 |
|---|---|---|---|---|---|---|---|---|---|---|---|---|---|---|---|---|---|---|---|---|
| 101 | o | o | o |  |  |  |  |  |  |  |  |  |  |  |  |  |  |  |  | o |
| 102 |  | o | o | o |  |  |  | o |  |  |  | o |  |  |  |  |  |  |  |  |
| 103 |  |  |  |  |  | o | o | o |  | o | o |  |  |  | o | o |  |  |  |  |
| 104 |  |  |  |  | o |  |  |  | o |  |  |  | o | o |  |  | o | o | o | o |
| 105 |  |  |  |  |  |  |  |  |  |  |  |  |  |  |  |  | o |  |  |  |
| 106 |  |  |  |  | o | o | o |  | o | o | o |  |  | o | o |  |  | o |  |  |
| 107 |  | o |  |  | o |  |  |  |  |  | o |  | o | o | o |  |  |  | o |  |
| 108 |  |  | o |  |  |  |  |  |  |  |  |  |  |  |  |  | o | o | o |  |
| 109 | o | o |  |  |  | o |  |  | o |  |  |  | o |  |  |  |  |  |  |  |
| 110 | o |  |  |  |  |  | o |  |  | o |  |  | o |  |  |  |  |  |  |  |
| 111 |  |  |  |  |  |  |  | o | o | o |  |  |  | o |  |  |  |  |  |  |
| 112 |  |  |  |  |  |  |  |  |  |  |  | o |  |  |  |  | o | o |  |  |
| 113 |  |  |  |  |  |  |  |  |  |  |  |  |  |  |  | o |  |  |  |  |
| 114 | o | o | o | o |  |  |  |  |  |  |  |  |  |  |  |  |  |  |  |  |
| 115 |  |  |  |  | o | o |  |  | o | o |  |  |  |  |  |  |  |  |  |  |
| 116 |  |  |  | o |  |  |  |  |  |  |  |  | o | o |  |  | o | o | o | o |
| 117 |  |  |  |  |  |  | o | o |  |  |  |  |  |  |  |  |  |  |  | o |
| 118 |  | o |  |  | o | o |  |  |  |  |  |  |  |  |  |  |  |  |  |  |
| 119 |  | o | o | o |  |  |  |  |  |  | o | o |  |  |  |  |  |  |  |  |
| 120 |  |  |  |  | o | o | o | o |  |  |  |  |  |  | o |  |  |  |  |  |
| 121 | o |  |  |  | o |  |  |  |  |  |  |  |  |  |  | o |  |  |  |  |
| 122 |  |  |  |  |  |  |  |  | o | o | o | o |  |  |  |  |  |  |  |  |
| 123 |  |  |  |  |  |  |  |  |  |  |  |  | o | o | o | o |  |  |  |  |
| 124 |  |  |  |  |  |  |  |  |  |  |  |  |  |  |  |  | o | o | o | o |
| 125 |  |  |  |  |  |  |  |  |  |  |  |  |  |  |  |  |  |  |  |  |

o - Valve open, otherwise closed.

6117pl

With reference to FIG. 2, a feed gas mixture comprising hydrogen, carbon monoxide, carbon dioxide, methane and nitrogen is introduced in feed manifold 130 and open valve 101 to line 132 and adsorption bed 140. Adsorption bed 140 is packed with a 5A molecular sieve zeolite adsorbent, which retains the components other than hydrogen while allowing the hydrogen to pass through and be removed in line 150 from the product end of the adsorption bed 140 through open valve 121 and product manifold 158. The adsorbent bed 140, as well as beds 142, 144, 146 and 148, can be filled with two adsorbents, such that an activated carbon layer is situated near the feed end of the beds, such as where lines 132, 134, 136, 138 and 139 enter the beds respectfully, which activated carbon adsorbs methane, water and carbon dioxide which may be contained in the feed gas mixture. The remainder of the bed and the predominant volume of the bed associated with the product end of each of the beds, such as where product lines 150, 152, 154, 156, and 157 exit the respective beds, contains the adsorbent which is selective for the other components and non-selective for the hydrogen product.

Adsorption continues in bed 140 for a set period of time which is comparable to when breakthrough of the other components would occur in line 150. During this time, the hydrogen enriched product in line 150 and product manifold 158 is removed as product, as well as a portion recycled in line 160 for use in repressurizing one of the remaining parallel adsorption beds and additionally for purging one of the remaining additional beds in accordance with Table 3.

At the end of adsorption for adsorbent bed 140, pressure equalization is performed between adsorbent bed 140 and adsorbent bed 144 wherein valves 121 and 116 are closed at the product end of adsorbent bed 140 and valve 101 is closed at the feed end of adsorbent bed 140 and gas contained in the void space, as well as some adsorbed gas, is removed countercurrently from adsorbent bed 140 through line 132, open valve 106, pressure equalization manifold 164, open valve 108, and line 136 to assist in respressurzing adsorbent bed 144 to a first intermediate pressure level. At a fixed time, which approximates equalization of pressures between bed 140 and 144, this first pressure equalization is discontinued.

Adsorbent bed 140 is then further pressure equalized from a first intermediate pressure down to a second lower intermediate pressure by gas flow communication with adsorbent bed 146. The flow of void space and adsorbed gas is countercurrent from bed 140 through line 132 and open valve 106 passing through pressure equalization manifold 164 and open valve 109 to enter through line 138 into adsorbent bed 146. Adsorbent bed 146 is thus pressurized up to a second intermediate pressure. At a fixed time approximating pressure equalization between bed 140 and 146, this second pressure equalization is discontinued.

Adsorbent bed 140 is then further pressure equalized with adsorbent bed 148. Again, adsorbed gas and any residual void space gas is removed countercurrently from adsorbent bed 140 through line 132, open valve 106, pressure equalization manifold 164, open valve 110 and gas line 139 to pass into adsorbent bed 148 which is raised to a third intermediate pressure. At a fixed time approximating pressure equalization between adsorbent bed 140 and adsorbent bed 148, this third pressure equalization is discontinued at a third intermediate pressure level.

Adsorbent bed 140 is then depressurized through line 132 countercurrently to remove residual adsorbed components from its adsorbent through open valve 111 and vent manifold 162. This again is conducted for a fixed time approximating reduction of pressure to atmospheric conditions.

Adsorbent bed 140 is then purged countercurrently with a portion of the hydrogen-enriched product in product manifold 158 from another of the vessels presently undergoing adsorption, which in this instance is adsorption bed 144. The hydrogen-enriched product gas is removed from product manifold 158 in purge and repressurization manifold 160 through open valve 116 and line 150. The purge gas passes countercurrently through the adsorbent in bed 140 to remove residual adsorbed other components which again is removed in line 132, open valve 111 and vent manifold 162. The effect of the countercurrent pressure equalizations of adsorbent bed 140, as well as the countercurrent depressurization and countercurrent purge, is to move any adsorption fronts of adsorbed impurities or other components from near the product end of adsorbent bed 140 where line 150 enters the bed to the feed end of adsorbent bed 140 or where feed line 132 enters the bed. This advantageously keeps the adsorbent fronts sharp and renews the capacity of adsorbent bed 140 for a full adsorption sequence.

Adsorbent bed 140 is then conducted through a repressurization, which includes receiving co-currently pressure equalization gas from adsorbent bed 142 up to a third intermediate pressure wherein gas from bed 142 passes through line 134, open valve 107, pressure equalization manifold 164, open valve 106, and line 132 to be co-currently introduced into adsorbent bed 140. After a fixed period of time approximating pressure equalization at the third intermediate pressure between beds 140 and 142, the pressure equalization is discontinued. After an idle time, which is performed merely to satisfy appropriate integrated sequencing of the various adsorption beds, adsorbent bed 140 is further pressure equalized.

This second pressure equalization raises the pressure of adsorbent bed 140 to a second intermediate pressure by passing gas co-currently into adsorbent bed 140 from adsorbent bed 144, through line 136, open valve 108, pressure equalization manifold 164, open valve 106 and line 132 to raise the gas pressure in bed 140 to the second intermediate pressure. This second pressure equalization is conducted for a fixed period of time approximating equalization of pressure between bed 140 and bed 144. At the termination of this second pressure equalization, bed 140 experiences an idle time merely to account for the integrating sequencing of the various beds.

Adsorbent bed 140 is then further elevated in pressure with a pressure equalization with bed 146 wherein gas from bed 146 passes through line 138, open valve 109, pressure equalization manifold 164, open valve 106 and line 132 to co-currently further repressurize bed 140 to a first intermediate pressure. This pressure equalization is conducted for a fixed period of time to approximate the obtaining of the first intermediate pressure between bed 140 and bed 146.

Adsorbent bed 140 then experiences a third idle period again for appropriate integrated sequencing of the various beds before being repressurized countercurrently with hydrogen-enriched product from product

13

manifold 158 repressurization and purge manifold 160, open valve 116 and product line 150. Repressurization is continued countercurrently for a fixed period of time approximating repressurization to a pressure approximately to the pressure of the feed gas mixture. This places adsorbent bed 140 in condition for a renewed adsorption step as first set forth.

Each of the beds 140, 142, 144, 146 and 148 go through a comparable sequence of steps using their separate feed lines 132, 134, 136, 138 and 139 connected to the feed gas mixture manifold 130 and further using the product manfiold 158 which is connected to the product lines 150, 152, 154, 156 and 157. The appropriate integration of the remaining beds 142, 144, 146 and 148 is set forth in the cycle steps Table 3 in view of the valve chart in Table 4. However, again the advantage of the process description just detailed is that the countercurrent pressure equalizations of a bed finishing adsorption results in maintaining sharp adsorption fronts of the impurity or other component adsorbed on the bed adsorbent and also results in the movement of that adsorption front toward the feed end of the bed so as to maintain the maximum capacity of the bed during the next adsorption sequence.

The present invention has been described with reference to a four and five bed parallel grouping of adsorption beds, but the number of beds utilized in a multi-bed parallel grouping is not as significant as the appropriate use of countercurrent pressure equalizations in a depressurizing bed when purifying hydrogen from other components or impurities in a feed gas mixture. The use of multiple countercurrent pressure equalizations in a depressurizing bed in a hydrogen pressure swing adsorption cycle provides significant improvements over the prior art in which the prior art almost uniformly adopted and taught the benefit of cocurrent pressure equalizations of a depressurizing bed for hydrogen pressure swing adsorption cycles.

A similar two-pressure equalization cycle sequence can be performed in a five-bed arrangement as depicted in FIG. 2, but wherein two beds have overlapping adsorption steps as set forth in the cycle sequences illustrated in Table 5 and the operation of valves set forth in the Table 6 Valve Chart. With reference to FIG. 2, Table 5 and Table 6, it can be appreciated that during any period of time two separate adsorption beds are simultaneously or in an overlapping manner on adsorption. The advantage of this technique is that enhanced throughput capacity of gas and production of product gas or hydrogen is possible.

## Table 5 - Cycle Steps

### 2 Beds on Feed, 2 Pressure Equalizations

| Cycle Time Minutes | Bed Number | | | | |
|---|---|---|---|---|---|
| | 140 | 142 | 144 | 146 | 148 |
| 0-1 | A | PE1 | DP | PE1 | A |
| 1-2 | A | PE1 | P | PE1 | A |
| 2-3 | A | RP | PE2 | PE2 | A |
| 3-4 | A | A | PE1 | DP | PE1 |
| 4-5 | A | A | PE1 | P | PE1 |
| 5-6 | A | A | RP | PE2 | PE2 |
| 6-7 | PE1 | A | A | PE1 | DP |
| 7-8 | PE1 | A | A | PE1 | P |
| 8-9 | PE2 | A | A | RP | PE2 |
| 9-10 | DP | PE1 | A | A | PE1 |
| 10-11 | P | PE1 | A | A | PE1 |
| 11-12 | PE2 | PE2 | A | A | RP |
| 12-13 | PE1 | DP | PE1 | A | A |
| 13-14 | PE1 | P | PE1 | A | A |
| 14-15 | RP | PE2 | PE2 | A | A |

A - Adsorption
PE - Pressure Equalization
DP - Depressurization
P - Purge
I - Idle
RP - Repressurization

15

TABLE 6 — VALVE CHART (2PEs with two beds on Feed)

| Valve No. | 0-1 | 1- | 2- | 3-4 | 4-5 | 5- | 6- | 7- | 8- | 9-10 | 10-11 | 11-12 | 12-13 | 13-14 | 14-15 |
|---|---|---|---|---|---|---|---|---|---|---|---|---|---|---|---|
| 101 | O | O | O | O | O | O | O | O | O | O | O | O | O | O | O |
| 102 | | | | O | O | O | O | O | O | O | O | O | O | O | O |
| 103 | O | O | | | | | | | | | | | O | O | |
| 104 | O | | | | | | O | O | O | | | | | | |
| 105 | | | | | | | | | | O | O | | O | O | O |
| 106 | O | O | O | O | O | | | | | | | | | | |
| 107 | | | | | | | O | O | | | | | O | O | |
| 108 | | | O | O | O | O | | | O | O | O | | | | |
| 109 | | | O | | | O | | | | O | O | | | | |
| 110 | | | | | | | | | | | | | | | |
| 111 | | | | | | | | | | | | | | | |
| 112 | | | | | | | | | | | | | | | |
| 113 | O | O | | O | O | | O | O | | | | | | | |
| 114 | | | | | | | O | O | | | | | | | |
| 115 | | | | | | | | | | | | | | | |
| 116 | | | | | | | | | | | | | | | |
| 117 | | | O | | | | | | | | | | | | |
| 118 | O | O | | | O | O | | | | | | | | | |
| 119 | | | | | | | | O | O | | | | | O | O |
| 120 | | | O | | | | | | | | O | O | | O | O |
| 121 | O | O | | | | | | | | | | | | | |
| 122 | | | | | | | | | | | | | | | |
| 123 | | | | | | | | | | | | | | | |
| 124 | | | | O | O | O | O | O | O | O | O | O | O | O | O |
| 125 | O | O | O | O | O | O | O | O | O | O | O | O | O | O | O |

O - Valve open, otherwise closed.

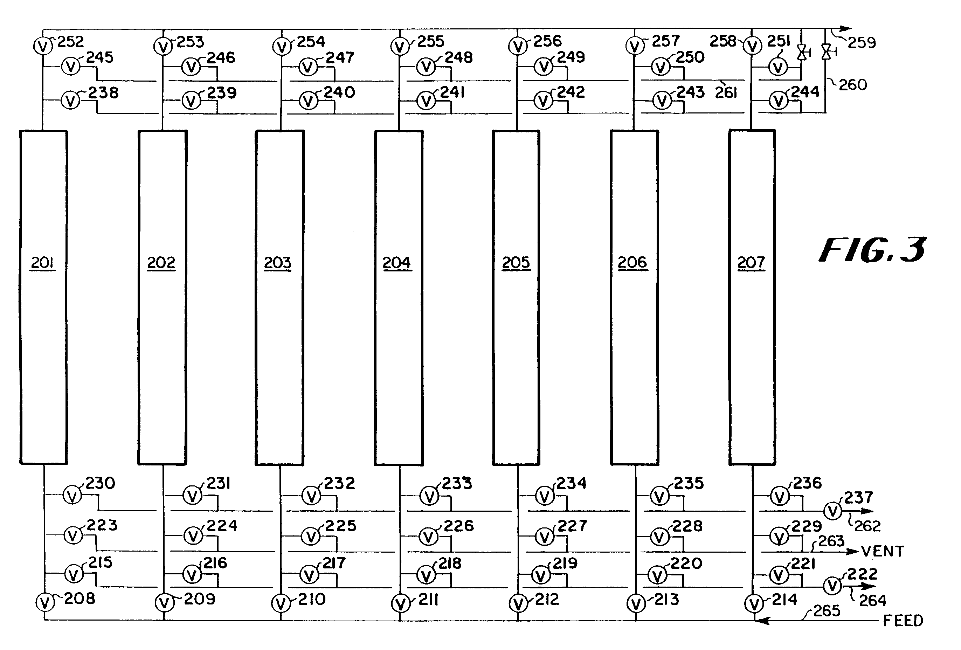

In a similar manner, the three pressure equalization process described above can be conducted with overlapping or simultaneous two-bed adsorption processing in a series of beds configured as in FIG. 3 having seven beds in number; 201, 202, 203, 204, 205, 206, and 207, which are connected by feed line 265, pressure equalization, depressurization and vent lines 262, 263 and 264, and purge and repressurization lines 260 and 261. Such a process operation is set forth in the cycle sequence of Table 7 below and the valve operation of Table 8 Valve Chart for FIG 3. Again, this provides additional throughput capacity for the production of hydrogen wherein two beds are processing feed at the same time.

## Table 7 - Cycle Steps

### 2 Beds on Feed, 3 Pressure Equalizations

| Cycle Time Minutes | Bed Number | | | | | | |
|---|---|---|---|---|---|---|---|
| | 201 | 202 | 203 | 204 | 205 | 206 | 207 |
| 0-1 | A | PE1 | PE3 | P | PE3 | PE1 | A |
| 1-2 | A | RP | PE2 | P | DP | PE2 | A |
| 2-3 | A | RP | PE2 | P | DP | PE2 | A |
| 3-4 | A | A | PE1 | PE3 | P | PE3 | PE1 |
| 4-5 | A | A | RP | PE2 | P | DP | PE2 |
| 5-6 | A | A | RP | PE2 | P | DP | PE2 |
| 6-7 | PE1 | A | A | PE1 | PE3 | P | PE3 |
| 7-8 | PE2 | A | A | RP | PE2 | P | DP |
| 8-9 | PE2 | A | A | RP | PE2 | P | DP |
| 9-10 | PE3 | PE1 | A | A | PE1 | PE3 | P |
| 10-11 | DP | PE2 | A | A | RP | PE2 | P |
| 11-12 | DP | PE2 | A | A | RP | PE2 | P |
| 12-13 | P | PE3 | PE1 | A | A | PE1 | PE3 |
| 13-14 | P | DP | PE2 | A | A | RP | PE2 |
| 14-15 | P | DP | PE2 | A | A | RP | PE2 |
| 15-16 | PE3 | P | PE3 | PE1 | A | A | PE1 |
| 16-17 | PE2 | P | DP | PE2 | A | A | RP |
| 17-18 | PE2 | P | DP | PE2 | A | A | RP |
| 18-19 | PE1 | PE3 | P | PE3 | PE1 | A | A |
| 19-20 | RP | PE2 | P | DP | PE2 | A | A |
| 20-21 | RP | PE2 | P | DP | PE2 | A | A |

A - Adsorption  
DP - Depressurization  
I - Idle  
P - Purge  
PE - Pressure Equalization  
RP - Repressurization

Table 8 - Valve Chart (2 beds on Feed, 3PE)

Time (Min): 0-1, 1-2, 2-3, 3-4, 4-5, 5-6, 6-7, 7-8, 8-9, 9-10, 10-11, 11-12, 12-13, 13-14, 14-15, 15-16, 16-17, 17-18, 18-19, 19-20, 20-21

Valve No.: 208, 209, 210, 211, 212, 213, 214, 215, 216, 217, 218, 219, 220, 221, 222, 223, 224, 225, 226, 227, 228, 229, 230, 231, 232, 233, 234, 235, 236, 237, 238, 239, 240, 241, 242, 243, 244, 245, 246, 247, 248, 249, 250, 251, 252, 253, 254, 255, 256, 257, 258

0 – Valve open, otherwise closed.

6117p6

A comparison of the four parallel connected adsorbent bed process of the present invention with the cycle set forth in the Batta patent wherein the significant difference is the countercurrent pressure equalizations of the present invention in contrast to the cocurrent pressure equalizations of the U.S. Patent No. 3,564,816 cycle is illustrated in Table 9. The comparison of these two processes additionally involves slight variations in feed pressure and composition and the ratio of activated carbon adsorbent and 5A molecular sieve zeolite adsorbent. These differences are perceived to be insignificant with regard to any effect on the results set forth in Table 9. Table 9 provides a comparative result of the present invention and the prior art U.S. Patent No. 3,564,816. It will be noted that the feed is significantly higher in the present invention due to the lack of criticality of passing impurities at the product end of the bed due to sharp, small, mass transfer zones and adsorption fronts maintained closer to the feed end of the adsorbent bed with the present invention in contrast to the elongated mass transfer zones with adsorbent fronts close to the product end of the prior art, exemplified by U.S. Patent No. 3,564,816. It is also noted that hydrogen

18

production is significantly higher with the process of the present invention, despite higher hydrogen purge rates, and recoveries are somewhat higher in the present invention versus the prior art, exemplified by U.S. Patent No. 3,564,816.

Table 9

Comparison of Countercurrent and Cocurrent Pressure Equalization for "H$_2$ Only" PSA

| | Present Invention Countercurrent | Batta Cocurrent |
|---|---|---|
| Carbon/Sieve by Vol | 3/1 | 2/1 |
| Pressure psia | 300 | 270 |
| Feed Comp. mole % | | |
| H$_2$ | 74.6 | 77.6 |
| CO$_2$ | 18.9 | 16.4 |
| CO | 0.5 | 0.3 |
| CH$_4$ | 5.8 | 4.5 |
| N$_2$ | 0.2 | 1.2 |
| Feed SCF/ft$^3$ bed | 52.3 | 35.1 |
| H$_2$ Prod SCF/ft$^3$ bed | 30.4 | 20.5 |
| H$_2$ Purge in SCF/ft$^3$ bed | 6.2 | 4.3 |
| H$_2$ Recovery % | 77.8 | 75.2 |
| H$_2$ Product Impurities ppm | 15 | 10 |

As a result, the present invention, using multiple countercurrent pressure equalizations, shows significant and unexpected improvements over the processes of the prior art which almost uniformly advocate the use of cocurrent pressure equalizations.

The present invention has been set forth with regard to several preferred embodiments however, the scope of the invention should be ascertained from the claims which follow.

**Claims**

1. A method for recovering a hydrogen-enriched product from a feed gas mixture containing hydrogen and at least one other component by pressure swing adsorption in a plurality of adsorbent beds containing adsorbent selective for the adsorption of said other component(s) over hydrogen, comprising the steps of:

(a) introducing said feed gas into a feed end of at least one first bed of said plurality of adsorbent beds at an elevated adsorption pressure, adsorbing said other component(s) on said adsorbent and discharging said hydrogen-enriched product from a product end of said at least one first bed;

(b) discontinuing the adsorption of step (a) and pressure equalizing said first bed with a second bed of said plurality of adsorbent beds at a lower pressure to depressurize said first bed to a first intermediate pressure by removing a first depressurization gas from said first bed countercurrently from the feed gas introduction through said first bed and introducing said first depressurization gas into a feed end of said second bed;

(c) discontinuing the pressure equalization of step (b) and further pressure equalizing said first bed with a third bed of said plurality of adsorbent beds at a further lower pressure to further depressurize said first bed to a second intermediate pressure by removing a second depressurization gas from said first bed countercurrently and introducing said second depressurization gas into a feed end of said third bed;

19

(d) depressurizing the first bed countercurrently to a lowest pressure to remove said other component(s) from said first bed;

(e) purging said first bed countercurrently by introducing hydrogen-enriched gas through said product end of said first bed and discharging said gas and residual other components of said feed gas mixture through said feed end of said first bed;

(f) pressure equalizing said first bed to said second intermediate pressure by introducing into said first bed, cocurrently to the introduction of feed gas to said first bed, a second depressurization gas from another of said plurality of adsorbent beds undergoing step (c);

(g) further pressure equalizing said first bed from said second intermediate pressure to said first intermediate pressure by introducing into said first bed, cocurrently, a first depressurization gas from another of said plurality of adsorbent beds undergoing step (b); and

(h) repressurizing said first bed countercurrently by introducing hydrogen-enriched gas through said product end of said first bed to raise its pressure to approximately said elevated adsorption pressure of step (a).

2. The method of Claim 1 in which the steps are performed repeatedly in each of said plurality of beds to comprise a continuous cyclic method.

3. The method of Claim 1 wherein the method is performed in four parallel adsorbent beds.

4. The method of Claim 1 wherein said other components are selected from the group consisting of carbon dioxide, methane, carbon monoxide, nitrogen and mixtures thereof.

5. The method of Claim 1 wherein said hydrogen-enriched gas purge is at least a portion of the hydrogen-enriched product of said plurality of adsorbent beds.

6. The method of Claim 1 wherein the hydrogen-enriched product is at least 99.5% hydrogen.

7. The method of Claim 1 wherein the adsorbent is selected from the group consisting of zeolites, activated carbon, activated alumina and mixtures thereof.

8. The method of Claim 1 wherein the pressure of said feed gas mixture during the adsorption of step (a) is in the range of approximately 100 to 1000 psia.

9. The method of Claim 1 wherein the adsorbent is layered in said plurality of adsorbent beds with an initial layer of activated carbon at the feed end of said beds and a subsequent layer of zeolite at the product end of said beds.

10. The method of Claim 1 wherein at least two parallel beds are simultaneously undergoing step a) of feed gas introduction and hydrogen-enriched product production for at least a portion of such steps in each bed.

11. The method of Claim 1 wherein after step (c) pressure equalizing said first bed with a fourth bed of said plurality of adsorbent beds at a third lower pressure to further depressurize said first bed to a third intermediate pressure by removing a third depressurization gas from said first bed countercurrently and introducing said third depressurization gas into a feed end of said fourth bed, and after step (e) pressure equalizing said first bed from said lowest pressure to said third intermediate pressure by introducing into said first bed, cocurrently, a third depressurization gas from another of said plurality of adsorbent beds undergoing depressurization in a third pressure equalization.

12. The method of Claim 11 wherein the method is performed in five parallel adsorbent beds.

13. The method of Claim 11 wherein at least two parallel beds are simultaneously undergoing step a) of feed gas introduction and hydrogen-enriched product production for at least a portion of such steps in each bed.

14. A method for recovering a hydrogen-enriched product from a feed gas mixture containing hydrogen and at least one other component selected from the group consisting of carbon dioxide, methane, carbon monoxide, nitrogen and mixtures thereof by pressure swing adsorption in four parallel connected adsorbent beds containing adsorbent selective for the adsorption of said other component(s) over hydrogen, comprising the steps of:

(a) introducing said feed gas into a feed end of a first bed of said adsorbent beds at an elevated adsorption pressure, adsorbing said other component(s) on said adsorbent and discharging said hydrogen-enriched product from a product end of said first bed until an adsorption front of said other component(s) is close to a product end of said adsorbent in said first bed;

(b) discontinuing the adsorption of step (a) and pressure equalizing said first bed with a second bed of said adsorbent beds at a lower pressure, which has undergone the pressure equalization of step (f), to depressurize said first bed to a first intermediate pressure by removing a first depressurization gas from said first bed, countercurrently from the feed gas introduction through said first bed, to move said adsorption front from said product end of said first bed toward said feed end of said first bed and introducing said first depressurization gas into a feed end of said second bed to equalize the pressure in said first and second beds at said first intermediate pressure;

(c) discontinuing the pressure equalization of step (b) and further pressure equalizing said first bed with a third bed of said adsorbent beds at a further lower pressure, which has undergone the purge of step (e), to further depressurize said first bed to a second intermediate pressure by removing a second depressurization gas from said first bed countercurrently to move said adsorption front further from said product end of said first bed toward said feed end of said first bed and introducing said second depressurization gas into a feed end of said third bed to equalize the pressure in said first and third beds at said second intermediate pressure;

(d) depressurizing said first bed countercurrently to a lowest pressure to remove said other component(s) from said first bed as a third depressurization gas which is removed from said beds as a by-product;

(e) purging said first bed countercurrently by introducing hydrogen-enriched product gas produced in said adsorbent beds through said product end of said first bed and discharging said gas and residual other component(s) of said feed gas mixture through said feed end of said first bed, which is removed from said beds as a by-product, to further move said adsorption front further from said product end of said first bed toward said feed end of said first bed;

(f) pressure equalizing said first bed from said lowest pressure to said second intermediate pressure by introducing a second depressurization gas, cocurrently to the introduction of feed gas to said first bed, into said first bed from another of said adsorbent beds undergoing step (c) to equalize the pressure in the two beds at said second intermediate pressure;

(g) further pressure equalizing said first bed from said second intermediate pressure to said first intermediate pressure by introducing a first depressurization gas cocurrently into said first bed from another of said adsorbent beds undergoing step (b) to equalize the pressure in the two beds at said first intermediate pressure;

(h) repressurizing said first bed countercurrently by introducing hydrogen-enriched product gas produced in said adsorbent beds through said product end of said first bed to raise its pressure to approximately said elevated adsorption pressure of step (a) and to prepare it to undergo step (a) again; and

(i) performing steps (a) through (h) sequentially in each of said four adsorbent beds in a continuous cyclic manner.

15. A method for recovering a hydrogen-enriched product from a feed gas mixture containing hydrogen and at least one other component selected from the group consisting of carbon dioxide, methane, carbon monoxide, nitrogen and mixtures thereof by pressure swing adsorption in five parallel connected adsorbent beds containing adsorbent selective for the adsorption of said other component(s) over hydrogen, comprising the steps of:

(a) introducing said feed gas into a feed end of a first bed of said adsorbent beds at an elevated adsorption pressure, adsorbing said other component(s) on said adsorbent and discharging said hydrogen-enriched product from a product end of said first bed until an adsorption front of said other component(s) is close to a product end of said adsorbent in said first bed;

(b) discontinuing the adsorption of step (a) and pressure equalizing said first bed with a second bed of said adsorbent beds at a lower pressure, which has undergone the pressure equalization of step (h), to depressurize said first bed to a first intermediate pressure by removing a first depressurization gas from said first bed, countercurrently from the feed gas introduction through said first bed, to move said adsorption front from said product end of said first bed toward said feed end of said first bed and introducing said first depressurization gas into a feed end of said second bed to equalize the pressure in said first and second beds at said first intermediate pressure;

(c) discontinuing the pressure equalization of step (b) and further pressure equalizing said first bed with a third bed of said adsorbent beds at a further lower pressure, which has undergone the pressure equalization of step (g), to further depressurize said first bed to a second intermediate pressure by removing a second depressurization gas from said first bed countercurrently to move said adsorption front further from said product end of said first bed toward said feed end of said first bed and introducing said second depressurization gas into a feed end of said third bed to equalize the pressure in said first and third beds at said second intermediate pressure;

(d) discontinuing the pressure equalization of step (c) and yet further pressure equalizing said first bed with a fourth bed of said adsorbent beds at a yet further lower pressure, which has undergone the purge of step (f), to further depressurize said first bed to a third intermediate pressure by removing a third depressurization gas from said first bed countercurrently to move said adsorption front yet further from said product end of said first bed toward said feed end of said first bed and introducing said third depressurization gas into a feed end of said fourth bed to equalize the pressure in said first and fourth beds at said third intermediate pressure;

(e) depressurizing the first bed countercurrently to a lowest pressure to remove said other component(s) from said first bed as a fourth depressurization gas which is removed from said beds as a by-product;

(f) purging said first bed countercurrently by introducing hydrogen-enriched product gas produced in said adsorbent beds through said product end of said first bed and discharging said gas and residual other component(s) of said feed gas mixture through said feed end of said first bed, which is removed from said beds as a by-product, to further move said adsorption front further from said product end of said first bed toward said feed end of said first bed;

(g) pressure equalizing said first bed from said lowest pressure to said third intermediate pressure by introducing a third depressurization gas, cocurrently to the introduction of feed gas to said first bed, into said first bed from another of said adsorbent beds undergoing step (d) to equalize the pressure in the two beds at said third intermediate pressure;

(h) pressure equalizing said first bed from said third intermediate pressure to said second intermediate pressure by introducing a third depressurization gas, cocurrently to the introduction of feed gas to said first bed, into said first bed from another of said adsorbent beds undergoing step (c) to equalize the pressure in the two beds at said second intermediate pressure;

(i) further pressure equalizing said first bed from said second intermediate pressure to said first intermediate pressure by introducing a first depressurization gas cocurrently into said first bed from another of said adsorbent beds undergoing step (b) to equalize the pressure in the two beds at said first intermediate pressure;

(j) repressurizing said first bed countercurrently by introducing hydrogen-enriched product gas produced in said adsorbent beds through said product end of said first bed to raise its pressure to approximately said elevated adsorption pressure of step (a) and to prepare it to undergo step (a) again; and

(k) performing steps (a) through (j) sequentially in each of said five adsorbent beds in a continuous cyclic manner.

*FIG.1*

FIG.2

*FIG. 3*